# EUROPÄISCHE PATENTSCHRIFT

(11) **EP 1 426 400 B1**
(45) Veröffentlichungstag und Bekanntmachung des Hinweises auf die Patenterteilung: **21.03.2007**
(21) Anmeldenummer: 03103814.4
(22) Anmeldetag: 15.10.2003
(51) Int. Cl.: C08J 3/03, C08J 3/16

(54) **Kontinuierliches Verfahren zur Herstellung füllstoffhaltiger Kautschukgranulate**
Continuous process for production of filler containing rubber granules
Procedé continu de production de granulat de caoutchouc contenant des charges

(30) Priorität: 05.12.2002 DE 10256790
(43) Veröffentlichungstag der Anmeldung: 09.06.2004
(73) Patentinhaber: Degussa GmbH, 40474 Düsseldorf (DE)
(72) Erfinder: Schmitt, Matthias, 69151, Neckargemünd (DE); Görl, Udo Dr., 45657, Recklinghausen (DE); Stober, Reinhard Dr., 63594, Hasselroth (DE)

(56) Entgegenhaltungen:
- EP-A- 1 035 155
- EP-A- 1 160 284
- US-B1- 6 433 064
- GORL U ET AL: "RUBBER/FILLER COMPOUND SYSTEMS IN POWDER FORM - A NEW RAW MATERIAL GENERATION FOR SIMPLIFICATION OF THE PRODUCTION PROCESSES IN THE RUBBER INDUSTRY/PART 1: POWDER RUBBER BASED ON 3-SBR/CARBON BLACK" KAUTSCHUK UND GUMMI - KUNSTSTOFFE, DR. ALFRED HUTHIG VERLAG GMBH. HEIDELBERG, DE, Bd. 55, Nr. 1/2, Februar 2002 (2002-02), Seiten 23-32, XP001074444 ISSN: 0948-3276

## Beschreibung

Die Erfindung betrifft ein kontinuierliches Verfahren zur Herstellung füllstoffhaltiger Kautschukgranulate auf der Basis von Kautschuk-Latex-Emulsionen durch Ausfällen aus wasserhaltigen Mischungen.

Über Ziel und Zweck des Einsatzes von Pulverkautschuk sowie über mögliche Verfahren zu ihrer Herstellung sind eine Vielzahl von Publikationen erschienen [1-5].

Die Erklärung für das Interesse an pulverförmigen Kautschuk/Füllstoff-Batches ergibt sich zwangsläufig aus der Verarbeitungstechnik in der Gummiindustrie. Dort werden die Kautschukmischungen mit hohem Aufwand an Energie, Zeit und Personal hergestellt. Der Hauptgrund hierfür ist, dass der Rohstoff Kautschuk in Ballenform vorliegt und während dessen Verarbeitung große Mengen an aktiven Füllstoffen (Industrierusse, Kieselsäuren etc.) in die Kautschukphase mechanisch eingearbeitet und dispergiert werden müssen.

Dieser mechanische Knetprozess erfolgt in der Praxis in großen Innenmischern oder auf Walzwerken, i.d.R. in mehreren Verfahrensstufen.

Da diese Prozesse sehr aufwendig sind, besteht ein stetiges Interesse der verarbeitenden Industrie nach alternativen Verfahren oder Rohstoffkonzepten zu suchen. Neue Verarbeitungskonzepte wie zum Beispiel kontinuierliche Mischprozesse bedingen oft eine andere Darreichungsform des Rohstoffs - in Pulver oder Granulatform.

Am geeignetsten für die Einführung neuer Mischtechnologien wird schon seit langem die Pulverkautschuktechnologie erachtet [6]. Sie kombiniert die Notwendigkeit des bereits inkorporierten Füllstoffs mit der besonderen Darreichungsform eines freifließenden Kautschukpulvers bzw. -granulats, geeignet für den Einsatz in kontinuierlichen Mischprozessen [7-9], wie sie in der Kunststoffindustrie seit vielen Jahren den Stand der Technik darstellt.

Die Herstellung des Pulverkautschuks erfolgt nach dem Stand der Technik durch Fällung aus einem Gemisch einer Füllstoffsuspension (z. B. Ruß oder Kieselsäure) und einer Kautschuk-Latex-Emulsion durch pH-Wert-Absenkung unter Zuhilfenahme entsprechender Brönsted- bzw. Lewissäuren (DE-PS 37 23 213 bzw. 214, DE-PS 28 22 148, DE 198 15 453.4, DE 198 16 972.8).

Als zwingend notwendig erachtet wird i.d.R. die Zugabe wasserlöslicher Salze eines Metalls der Gruppen IIa, IIb, IIIa oder VIII des periodischen Systems der Elemente in Mengen von 0,5 bis 10 phr zur Füllstoffsuspension.

Diese Gruppeneinteilung entspricht der IUPAC-Empfehlung (siehe Periodisches System der Elemente, Verlag Chemie, Weinheim, 1985). Typische Vertreter sind Magnesiumchlorid, Zinksulfat, Aluminiumchlorid, Aluminiumsulfat, Eisenchlorid, Eisensulfat, Kobaltnitrat und Nickelsulfat, wobei die Salze des Aluminiums insbesondere Aluminiumsulfat bevorzugt sind.

Ebenfalls wird teilweise die Zugabe von Alkalisilikat in Mengen von bis zu 5 phr empfohlen.

Die aus dem Stand der Technik bekannten Verfahren (z.B. DE 37 23 213 bzw. 214, DE 28 22 148, DE 198 15 453.4, DE 198 16 972.8) konzentrieren sich im wesentlichen auf die Durchführung dieser Kautschukkoagulation in einem zum Teil mehrstufig durchgeführten Batchansatz. Besonders aufwendig erscheint hier die Aufteilung des Füllstoffanteils in mehrere Fraktionen (das sog. Splitting), wodurch eine fest mit der Granulatmatrix verbundene Trennschicht um jedes Teilchen erzeugt werden soll. Aufgrund der Aufteilung des Verfahrens in bis zu drei Schritte, bei denen z. T. sogar noch der pH-Wert variiert wird, erscheinen diese Prozesse sehr aufwendig und teuer.

Eine weitere Prozessvariante ist die sogenannte "Rohrfällung"(z.B. DE 100 08 877.5). Dieses weiterentwickelte Verfahren nutzt ein Mischrohr als Reaktionsraum, in dem die Füllstoffsuspension (die ggf. bereits mit den oben erwähnten Fällchemikalien versetzt ist) und die Kautschukemulsion oder der Latex gemischt und die Kautschukkoagulation durchgeführt wird. Zur Auslösung dieser Reaktion erfolgt z. T. noch eine zusätzliche Dosierung von Fällchemikalien in dieses "Fällrohr". Das hier beschriebenen Verfahren nutzt diesen Rohrreaktor jedoch nur als eine erste Reaktionsstufe. Die weitere Zugabe von Füllstoffsuspension und von Fällchemikalien erfolgt in einem nachgeschalteten Rührbehälter, der als Batchapparat betrieben wird.

Ein wesentlicher Nachteil des hier beschriebenen Verfahrens ist die Tatsache, dass der nachgeschaltete Rührkessel ebenfalls als Batchansatz betrieben wird. Ferner ist aufgrund der Latexeigenschaften eine erhebliche Verstopfungsgefahr im sog. "Fällrohr" zu erwarten.

Weiterentwicklungen (z. B. EP 1 035 155 A1) zielen auf eine kontinuierliche Herstellung der Produkte in einem Rohrreaktor ab. Bei dem hier beschriebenen Prozess werden die Füllstoffsuspension und die Kautschukemulsion kontinuierlich einem Rohrreaktor zudosiert. Die Zudosierung weiterer Füllstofffraktionen und der Fällchemikalien erfolgt längs der Rohrstrecke in verschiedenen Abschnitten. Durch den Einbau von Drosselorganen soll ein Druckaufbau in den einzelnen Abschnitten erzeugt werden, der eine Regelung der Durchmischung und der Kautschukkoagulation ermöglicht. Bei näherer Betrachtung dieses Verfahrens werden jedoch erhebliche Probleme deutlich, die zeigen, dass dieser Prozess nur in Ausnahmefällen zu einer abgeschlossenen Kautschukkoagulation führen kann. Die beispielhaft beschriebenen Anlagen weisen sehr geringe Strömungsgeschwindigkeiten im Rohrreaktor auf, was zu einer unzureichenden Durchmischung von Füllstoff und Kautschukemulsion und somit zu sehr inhomogenen Produkten führt. Ferner erscheinen die sehr kurzen Verweilzeiten (ca. 5 s) nicht ausreichend, um die Kautschukkoagulation (insbesondere von Naturlatex) vollständig abzuschließen. Dies würde analog zu dem oben beschriebenen "Fällrohr" zur Erfordernis eines nachgeschalteten Rührbehälters führen.

Eine weitere Einschränkung dieses Prozesses ist, aufgrund der festen Rohrlänge, durch die fest vorgegebene Verweilzeit in der Apparatur zu erwarten. Dies kann dazu führen, dass die Apparatur lediglich für eine bestimmte Rezeptur einsetzbar ist und im übrigen sehr anfällig auf Schwankungen der Edukteigenschaften wie z. B. das Koagulationsverhalten der Kautschukemulsion reagiert.

Aufgrund der in einem Rohr sehr hohen vorliegenden spezifischen Behälteroberfläche (Verhältnis aus Wandoberfläche zu Reaktionsvolumen) dürften ferner beträchtliche Verstopfungsprobleme aufgrund der Latexeigenschaften zu erwarten sein. Dieses Problem würde ferner durch die sehr geringen Strömungsgeschwindigkeiten und durch den Einbau von zusätzlichen Engstellen (Drosselquerschnitte und Statikmischer) dazu führen, dass eine erhöhte Verstopfungsgefahr vorhanden ist und die Produkte nicht reproduzierbar herstellbar sind.

US-B 6 433 064 beschreibt die Herstellung von Pulverkautschuk sowohl im Kontinuierlichen als auch im diskontinuierlichen Betrieb. Allerdings wird der Füllstoff in Fraktionen dem Reaktionsgemisch zugegeben.

Aus der Literatur ist ferner ein Verfahren bekannt (US 4 265 939) bei dem es vorrangig um die Herstellung von Kautschukpartikeln geht, die zur Vermeidung der Produktverklebung während des mehrstufigen Fällpozesses mit einer Polymersuspension (z. B. Polystyrol) gecoatet werden.
Bei diesem Verfahren handelt es sich ebenfalls um einen kontinuierlichen Prozess, der in rohrähnlichen Mischapparaturen durchgeführt wird. Ein Abschluss der Reaktion findet auch hier in einem Rührbehälter statt. Ziel des Verfahrens ist nicht die Herstellung homogener Füllstoff-Kautschuk-Präparationen in Granulatform sondern lediglich die Herstellung von Kautschukgranulaten.
Aufgrund der beschriebenen Technik ist hier ebenfalls mit den oben aufgeführten Problemen (eingeschränkte Rezepturfreiheit, eingeschränkte Verweilzeitvariation, erhebliche Verstopfungsgefahr) zu rechnen.
Ziel der hier vorliegenden Erfindung ist daher die Entwicklung eines Fäll- und Herstellverfahrens, das eine Vermeidung der oben beschriebenen Probleme (Batchbetrieb, Verstopfung der Apparatur, Toleranz bezüglich Schwankungen in den Edukteigenschaften bzw. Einschränkung von Rezepturvariationen) ermöglicht.
Das gemäß den Patentansprüchen hier beschriebene Verfahren löst diese Probleme auf verblüffend einfache Weise, indem ein kontinuierlich betriebener Rührkessel als Reaktor zum Einsatz kommt. Hier werden die Edukte (Füllstoffsuspension und Kautschukemulsion) über getrennte Leitungen zugeführt und unter intensivem Rühren äußerst homogen durchmischt. Durch die Zugabe der Fällmittel in die Füllstoffsuspension ist eine äußerst homogene Verteilung und effiziente Nutzung dieser Zusätze möglich. Überdosierungen können somit sehr vermieden werden. Die Latexkoagulation findet im wesentlichen bei Kontakt der Emulsionströpfchen mit der Füllstoffoberfläche statt. Hierdurch ist eine sehr homogene Verteilung von Kautschuk und Füllstoff gewährleistet. Falls die Produktrezeptur eine weitere Zugabe von Additiven, wie z.B. Prozessöl oder sonstige in der Kautschukindustrie übliche Mischungsadditiven erfordert, kann dies auch direkt in den Reaktionsbehälter erfolgen. Um den Füllstand des Reaktionsbehälters konstant zu halten bieten sich mehrere Möglichkeiten, wie z. B. das kontinuierliche Ablassen durch ein Bodenventil oder die Nutzung eines Überlaufs an.

Aufgrund der speziell entwickelten Reaktionsbedingungen (Art des Rührers, Strömungsverhältnisse im Reaktionsbehälter, aber auch die Einstellung der Feststoffkonzentration und die gezielte Dosierung der Fällchemikalien) ist es mit dieser Apparatur möglich, einen feinteiligen Füllstoff-Kautschuk-Verbund herzustellen, der als freifließendes Schüttgut vorliegt.
Bei den durchgeführten Untersuchungen wurden folgende bevorzugte Reaktionsbedingungen im Rührbehälter ermittelt:
Die Herstellung der mit Industrieruß gefüllten Mischungen erfolgte im Labormaßstab in einem Rührbehälter (10-301 Nutzvolumen), der mit einem zweistufigen MIG-Rührer oder alternativ mit einem einstufigen Propellerrührer ausgerüstet war.

Bei Einsatz des MIG-Rührers wurden bevorzugte Umfangsgeschwindigkeiten von ca. 2-3 m/s eingestellt, woraus sich Reynoldszahlen von ca. 1-3 x 10³ ergeben. Die Feststoffkonzentration lag bei ca. 10 %, die mittlere Verweilzeit im Reaktor betrug ca. 7-25 min, der eingestellte pH-Wert betrug ca. pH = 4.

Bei Einsatz des Propellerrührers wurden bevorzugte Umfangsgeschwindigkeiten von ca. 8-10m/s eingestellt, woraus sich Reynoldszahlen von ca. 3-5 x 10³ ergeben. Die Feststoffkonzentration lag bei ca. 10 % die mittlere Verweilzeit im Reaktor betrug ca. 7-12min, der eingestellte pH-Wert betrug ca. pH = 4.

Im Pilotmaßstab wurden die Untersuchungen mit den rußgefiillten Produkten in einem Rührbehälter (400 - 600 1 Nutzvolumen), der mit einem einstufigen Propellerrührer ausgestattet war, durchgeführt. Hier lagen die bevorzugten Umfangsgeschwindigkeiten bei ca. 8-12 m/s, die 8-12 m/s, die Reynoldszahlen ergaben sich zu ca. 7-12 x 10³. Die Feststoffkonzentrationen lagen bei ca. 8 - 12 %, die mittlere Verweilzeit im Reaktor betrug ca. 10-15 min, der eingestellte pH-Wert betrug ca. pH = 4.

Die hier angegebenen unteren Grenzen wurden für die Produkte auf Basis von E-SBR/Ruß, die oberen Grenzen für NR/Ruß ermittelt.

Bei der Herstellung von Produkten, die mit einem Kieselsäure-Silan - System (KS-Si) gefüllt sind, wurden bevorzugt folgende Prozessparameter eingestellt:

Versuchsdurchführung in einem Rührbehälter mit einen Nutzvolumen von ca. 301, der mit einem Propellerrührer ausgestattet war. Die bevorzugten Umfangsgeschwindigkeiten lagen bei ca. 8-10 m/s, woraus sich Reynoldszahlen von ca. 3-5 x 10³ ergeben. Die Feststoffkonzentration lag bei ca. 16 - 20 %, die mittlere Verweilzeit im Reaktor war kleiner eine Minute, der eingestellte pH-Wert betrug ca. pH = 4.

Wie insbesondere die Untersuchungen zu den rußgefiillten Produkten zeigen, ist eine Herstellung mit verschiedenen Rühraggregaten, dann jedoch mit angepassten Prozessbedingungen möglich. Die hier beschriebenen Bedingungen stellen somit eine besonders geeignete Ausführung dar.

Als geeignet haben sich aus dieser Erfahrung somit alle schnelllaufenden Mischaggregate, die kontinuierlich betrieben werden können gezeigt. Es ist somit auch vorstellbar, die Reaktion in einer geeigneten Zerkleinerungsmaschine (z.B. eine Dispergiermaschine mit einem Rotor-Stator-System) oder einer Granulationsmaschine (z.B. Granulationsmaschinen mit schnelllaufenden Rotoren, wie sie zum Beispiel zur Granulation von Füllstoffen zum Einsatz kommen), durchzuführen.

Nach Beendigung der erfindungsgemäßen Herstellung des füllstoffhaltigen Kautschukgranulates Ausführung kann, wie z. B. in DE 198 15 453.4, DE 198 16 972.8 beschrieben, noch die Zugabe einer weiteren Füllstofffraktion in einen nachgeschalteten und ebenfalls kontinuierlich betriebenen Rührbehälter erfolgen. Falls erforderlich ist es durch diese Rührbehälterkaskade möglich, vollkontinuierlich eine fest mit der Granulatmatrix verbundene Füllstoffschicht um jedes Teilchen zu legen.

Dieses Vorgehen empfiehlt sich insbesondere bei der Herstellung der rußgefüllten Produkte. Im Pilotmasstab wurde hierzu für einen mit ca. 76 phr N234 gefüllten E-SBR Kautschuks ca. 5 % der Füllstofffraktion in den zweiten seriellen Rührbehälter dosiert. Bei der Herstellung von Produkten auf Basis von Naturkautschuk, deren Füllgrade mit 47 phr Industrieruß gewählt waren, wurden ca. 40 % der Füllstofffraktion in den zweiten seriellen Rührbehälter dosiert. Beide Produkte wurden schonend gerührt (z.B. mit einem Impellerrührer) und hatten in diesem Apparat eine mittlere Verweilzeit von bis zu 120 min beim E-SBR/Ruß- und bis zu 480 min beim NR/Ruß-System.

Bei der Herstellung von niedrig gefüllten Produkten auf Basis von zum Kleben neigenden Polymeren, wie z. B. Naturkautschuk, hat sich die Zudosierung einer weiteren Füllstofffraktion in einen dritten seriellen Rührkessel als vorteilhaft erwiesen. Beispielsweise wurden bei einem mit 47phr N234 gefüllten NR ca. 5 % des Gesamtfüllstoffs kontinuierlich dem dritten seriellen Rührbehälter zudosiert.

Es hat sich aber auch gezeigt, dass ein zweiter oder gar dritter serieller Rührbehälter nicht zwingend erforderlich ist. Dies hängt, wie oben beschrieben, primär vom herzustellenden Stoffsystem ab, kann aber auch durch andere Maßnahmen, wie z.B. das nachträgliche Aufbringen einer Coatingschicht in einem Feststoffmischer erreicht werden (siehe Beispiel 4).

Aufgrund des geringen pH-Wertes des Füllstoffes (durch den Zusatz des Fällmittels bedingt), stellen sich in den Reaktionsbehältern mit steigender Anzahl der Apparate auch immer geringere pH-Werte ein. Dieser Effekt, der eine weitere Stabilisierung der hergestellten Granualte in den seriellen Behältern bewirkt, kann noch durch das Anpassen der pH-Werte der einzelnen seriellen Behälter begünstigt werden. In den durchgeführten Untersuchungen wurde eine bevorzugte Absenkung des pH-Wertes um 0 bis 0,4 ermittelt.

Die durchgeführten Untersuchungen haben ferner gezeigt, dass die Zugabe von weiteren Additiven (Prozessöl, Alterungsschutzmittel, Stabilisatoren etc.) ohne weiteren Aufwand möglich ist. Bei den lipophilen Füllstoffen (z.B. Industrieruß) erfolgt insbesondere die Zugabe von Öl vorteilhaft in die Füllstoffsuspension. Bei lipophoben/hydrophilen Füllstoffen (z. B. Kieselsäure) kann die Zugabe des Öls bevorzugt direkt vor dem Rührbehälter in die Kautschukemulsion oder direkt in den Reaktionsbehälter erfolgen.

Das hier beschriebene Verfahren eignet sich für die Herstellung von feinteiligen Füllstoff-Kautschuk-Compounds auf einer breiten Basis der bekannten Füllstoffe und Polymere.

Der Füllstoffgehalt kann 20 bis 99,9 Gew.-% bezogen auf die erfindungsgemäßen Kautschukgranulate betragen. Hierbei kommen insbesondere die aus der Kautschukverarbeitung bekannten Industrieruße und weißen Füllstoffe synthetischer Natur, wie zum Beispiel gefällte oder pyrogene Kieselsäuren oder natürliche Füllstoffe wie zum Beispiel Kieselkreide, Clay usw., zum Einsatz.

Besonders geeignet sind Ruße, wie sie allgemein in der Kautschukverarbeitung eingesetzt werden oder auch Ruße, deren Oberfläche durch oxidative Nachbehandlung modifiziert wurde.

Dazu gehören Fumace, Gas-, Thermal- und Flammruße mit einer Jodadsorptionszahl von 5 bis 1000 m²/g einer CTAB-Zahl von 15 bis 600 m³/g, einer DBP-Adsorption von 30 bis 400 ml/100 g und einer 24M4 DBP-Zahl von 50 bis 370 ml/100 g.

In einer besonderen Ausführungsform enthalten die erfindungsgemäßen Produkte Ruße nach z. B. DE 198 40 663 mit gegenüber Standardrußen verbesserten dynamischen Eigenschaften.

Besonders bevorzugt können Ruße mit DBP-Werten größer 100 ml/100 g eingesetzt werden. Die Ruße können nassgeperlt, trockengeperlt oder als Pulver eingesetzt werden.

Es ist aber auch die Herstellung in Verbindung mit anderen Feststoffen, wie z. B. Absorptions- und Adsorptionsmittel, u.a. Aktivkohle oder hochoberflächige Industrieruße, vorstellbar.

Falls die aus dem Stand der Technik bekannten Industrieruße zum Einsatz kommen, werden diese vorteilhaft möglichst früh aus dem Herstellprozess abgegriffen und kommen als nasser Fluffyruß oder nasses Granulat zum Einsatz.

Geeignet sind ebenfalls die aus dem Kautschuksektor bekannten gefällten Kieselsäuren (wobei als Ausgangsfüllstoff bevorzugt ein salzfrei gewaschener Filterkuchen oder in einer besonderen Ausführung eine aus Wasserglas und Schwefelsäure entstandene stark salzhaltige, insbesondere natriumsulfathaltige Kieselsäurefällsuspension dient) wie auch pyrogene Kieselsäuren. Diese besitzen im allgemeinen eine nach der bekannten BET-Methode bestimmte N₂ Oberfläche von 35 bis 700 m²/g, eine CTAB-Oberfläche von 30 bis 500 m²/g und eine DBP-Adsorption von 150 bis 400 ml/100 g.

Handelt es sich um weiße Naturfüllstoffe, wie z.B. Kieselkreiden oder Clays, so haben diese im allgemeinen eine N₂ Oberfläche von 2 bis 35 m²/g.

Die erfindungsgemäßen Kautschukgranulate können neben den genannten Füllstoffen gegebenenfalls auch die in der Polymer- und Kautschukindustrie bekannten Verarbeitungs- und Vulkanisationshilfsmittel, wie Zinkoxid, Zinkstearat, Stearinsäure, Polyalkohole, Polyamine, Weichmacher, Alterungsschutzmittel gegen Wärme, Licht oder Sauerstoff und Ozon, Verstärkerharze, Flammschutzmittel wie zum Beispiel Al(OH)₃ und Mg(OH)₂, Pigmente, verschiedenen Vernetzungschemikalien und gegebenenfalls Schwefel in den gummitechnisch üblichen Konzentrationen enthalten.

Bekannt sind auch die Verstärkungsadditive für die Kautschukvulkanisate, die aus den flüssigen Organosilanen der US-PS 3 842 111 und silikatischen Füllstoffen hergestellt werden (DE-PS 22 55 577 und US-PS 3 997 356). Die erfindungsgemäßen Kautschukgranulate können neben den genannten Füllstoffen gegebenenfalls auch diese Verstärkungsadditive enthalten.

Dies sind Organosiliciumverbindungen der allgemeinen Formel

[R¹ₙ(RO)₃₋ₙ Si-(Alk)ₘ-(Ar)p] q [B] (I),

R¹ₙ (RO)₃₋ₙ Si-(Alkyl) (II),

oder

R¹ₙ (RO)₃₋ₙ Si-(Alkenyl) (III)

hergestellt,
in denen bedeuten
- B:: -SCN, -SH, -C₁, -NH₂ (wenn q = 1) oder
-Sx- (wenn q = 2)
- R und R¹:: eine Alkylgruppe mit 1 bis 4 Kohlenstoffatomen, verzweigt oder nicht verzweigt, den Phenylrest, wobei alle Reste R und R¹ jeweils die gleiche oder eine verschiedene Bedeutung haben können, bevorzugt eine Alkylgruppe,
- n:: 0; 1 oder 2
- Alk:: einen zweiwertigen geraden oder verzweigten Kohlenstoffrest mit 1 bis 6 Kohlenstoffatomen,
- m:: 0 oder 1
- Ar:: einen Arylenrest mit 6 bis 12 C-Atomen
- p:: 0 oder 1 mit der Maßgabe, dass p und n nicht gleichzeitig 0 bedeuten,
- x:: eine Zahl von 2 bis 8,
- Alkyl:: einen einwertigen geraden oder verzweigten ungesättigten Kohlenwasserstoffrest mit 1 bis 20 Kohlenstoffatomen, bevorzugt 2 bis 8 Kohlenstoffatomen,
- Alkenyl:: einen einwertigen geraden oder verzweigten ungesättigten Kohlenwasserstoffrest mit 2 bis 20 Kohlenstoffatomen, bevorzugt 2 bis 8 Kohlenstoffatomen.

Diese Verbindungen werden, wenn sie wasserlöslich sind, im allgemeinen in Form von Lösungen oder ansonsten in Form von Emulsionen eingesetzt, wobei die Emulsionen auch in Gegenwart der Kieselsäuresuspension gebildet werden können.

Als Kautschuktypen einsetzbar und als wässrige Emulsionen darstellbar haben sich folgende Spezies gezeigt, einzeln oder im Gemisch miteinander:

Naturkautschuk, Emulsions-SBR mit einem Styrolanteil von 10 bis 50 %, Butyl-Acrylnitril-Kautschuk. Butylkautschuke, Terpolymere aus Ethylen, Propylen (EPM) und nicht konjugierte Diene (EPDM), Butadienkautschuke, SBR, hergestellt nach dem Lösungspolymerisationsverfahren, mit Styrolgehalten von 10 bis 25 %, sowie Gehalten an 1,2-Vinylbestandteilen von 20 bis 55 % und Isoprenkautschuke, insbesondere 3,4-Polyisopren.

Bei nach Lösungsmittelverfahren hergestellten Polymerisaten sind ggf. besondere Vorsichtsmaßnahmen wegen des Lösungsmittelgehaltes zu treffen.

Neben den genannten Kautschuken kommen folgende Elastomere, einzeln oder im Gemisch, in Frage:
Carboxylkautschuke, Epoxidkautschuke, Trans-Polypentenamer, halogenierte Butylkautschuke, Kautschuke aus 2-Chlor-Butadien, Ethylen-Vinylacetat-Copolymere, Epichlorhydrine, gegebenenfalls auch chemisch modifizierter Naturkautschuk, wie z. B. epoxidierte Typen.

Der Feststoffgehalt der eingesetzten Kautschuk-Emulsionen (bzw. -Lösungen) beläuft sich im allgemeinen auf 10 bis 65 %, bevorzugt zwischen 15 bis 30 %.

Die gemäß oben beschriebener Herstellweise erhaltenen, in Wasser befindlichen Kautschukpulver, werden anschließend mechanisch zum großen Teil, z. B. mit einem Bandfilter oder einer Filterpresse, entwässert.

Im Anschluss erfolgt ein thermischer Trocknungsvorgang bis auf eine Restfeuchte ≤ 3 %, bevorzugt ≤ 1, der vorteilhaft in einer Wirbelschicht durchgeführt wird. Falls erforderlich, z.B. wenn bei der Entwässerung mittels Filterpresse eine Filterkuchenplatte entsteht, kann das Produkt vor der Trocknung noch mittels eines Zerkleinerungs- oder Granulationsapparates entsprechend den Anforderungen (Teilchengrößenverteilung, Feingutanteil) konfektioniert werden.

In einer besonderen Ausführungsform hat es sich als vorteilhaft erwiesen, das fertige, getrocknete Kautschukpulver zur weiteren Reduzierung der Klebrigkeit mit geeigneten in der Gummiindustrie eingesetzten Produkten zu pudern, d. h. trocken zu coaten. Als geeignet erwiesen sich u. a. Stearinsäure, Kieselsäuren und insbesondere Zinkoxid in Mengen von 0,1 bis 3 phr, insbesondere 0,25 bis 1 phr. Das Aufbringen der Coatingschicht auf das Pulverkautschukkorn erfolgt in geeigneten Pulvermischern, d. h. unter Vermeidung von Scherung, um das Korn nicht zu zerstören.

Die aufgebrachte Coatingschicht ermöglicht insbesondere eine Lagerung über längere Zeiträume bei höherer Verdichtung der Produkte, z. B. im Silo, ohne dass es zu Verklebungen kommt.

Werden die erfindungsgemäßen Kautschukgranulate als Masterbatch für die Kautschukindustrie eingesetzt, so beträgt der Füllstoffgehalt im allgemeinen 20 bis 200, in einer bevorzugten Ausführung 30 bis 100 phr.

Für den Einsatz in der Umwelttechnik haben sich deutlich höhere Füllgrade in einem Bereich von 100 bis 2000 Teile auf 100 Teile Kautschuk (phr) bewährt. Hier übernimmt das Polymer im wesentlichen die Funktion des Bindemittels.

### Beispiele

### Eingesetzte Rohstoffe bei der Herstellung

- E-SBR - 1500: Emulsions-Styrolbutadien-Latex mit 23,5 % Styrolgehalt (BSL)
- E-SBR - 1712: Emulsions-Styrolbutadien-Latex mit 23,5 % Styrolgehalt (BSL)
- Prozessöl: Enerthene 1849-1
- Naturlatex: Field -Latex CV low ammonia
- Ultrasil 7000: gefällte Kieselsäure mit einer N2-Oberfläche (BET) von 185 m²/g und verbesserten Dispergiereigenschaften (Degussa AG) als Filterkuchen
- Si 75: Bis(triethoxysilylpropyl)disulfan (Degussa AG)
- Marlipal 1618/25: Emulgator: Fettalkoholpolyethylenglykolether (Condea)
- Corax N234: Aktivruß als nasser Fluffyruß (Degussa AG)

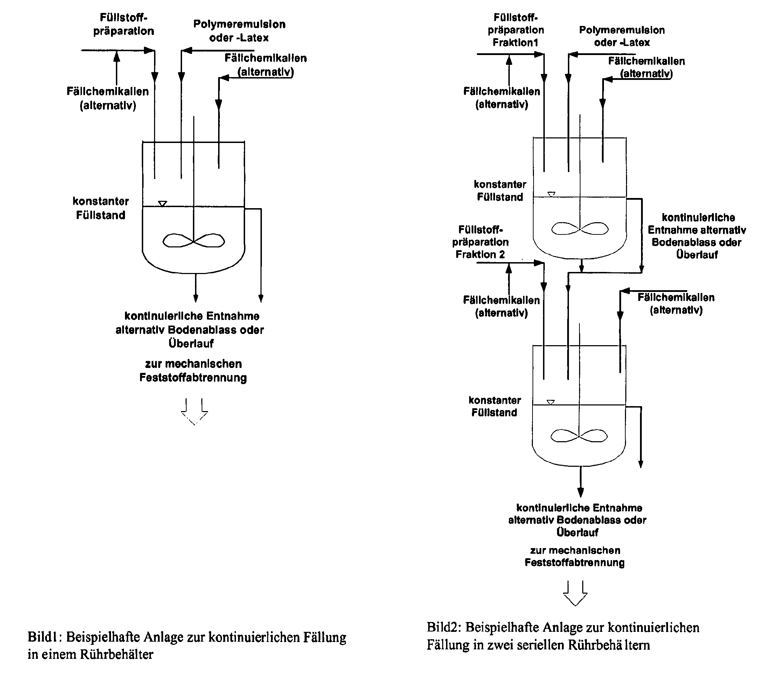

### Beispiel 1 (Bild 1): Herstellung von Pulverkautschuk auf Basis E-SBR 1500, Ultrasil 7000 Fällsuspension und Si 75

Unter Rühren wird eine stabile Suspension aus 32,9 kg (TS) Ultrasil 7000 (Filterkuchen), 2,63 kg Si 75 (entspricht 8 Teile bezogen auf 100 Teile getr. Kieselsäure), 329 g Marlipal 1618/25 (entspricht 1 % bez. auf die Kieselsäure) und 12,1 kg 9,3 %ige Aluminiumsulfatlösung in 2861 Wasser hergestellt.

Diese Suspension wird mit einer Pumpe (ca. 1200 kg/h) simultan mit der Kautschukemulsion (E-SBR 1500, 20,3 % Feststoff) dem Fällbehälter zudosiert. Der Gesamtdurchsatz beträgt 2180 kg/h. Unter heftigem Rühren wird die säurekatalysierte Latexkoagulation bei einem pH-Wert von 4 auf die Füllstoffteilchen durchgeführt. Das Produkt hat im 301-Rührbehälter eine mittlere Verweilzeit von ca. 0,8 min.

Der Feststoff wird anschließend mittels einer Zentrifuge oder einer Filterpresse vom Serum abgetrennt und in einer Wirbelschicht auf eine Restfeuchte unter 1 % getrocknet. Zur Konfektionierung wird der Filterkuchen vor der Trocknung mittels eines Granulationsapparates auf eine Teilchengröße von ca. 4mm zerkleinert.

Das Produkt enthält nach der Trocknung 100 phr (parts per hundred parts of rubber) Festkautschuk, 73 phr Ultrasil 7000 und 8 Teile Si 75 auf 100 Teile Kieselsäure.

Die anwendungstechnische und schüttguttechnische Bewertung der Probe ergab im Vergleich zu den Referenzprodukten (z. B. nach DE 198 43 301.8 hergestellte Produkte) keine Unterschiede.

### Beispiel 2 (Bild 2): Herstellung von Pulverkautschuk auf Basis E-SBR 1500, Corax N234 (nasser Fluffy)

Unter Rühren wird eine stabile Suspension aus 106,4 kg (TS) Corax N234 (nasser Fluffy) und 5,15 kg 9,5 %ige Aluminiumsulfatlösung in 20201 Wasser hergestellt.

Diese Suspension wird mit einer Pumpe (ca. 1540 kg/h) simultan mit der Kautschukemulsion (E-SBR 1500, 20,4 % Feststoff) dem Fällbehälter zudosiert. Der Gesamtdurchsatz beträgt 2240 kg/h. Unter heftigem Rühren wird die säurekatalytisierte Latexkoagulation unter der Zugabe von 1,5 kg Schwefelsäure (20 %) bei einem pH-Wert von 4, auf die Füllstoffteilchen durchgeführt. Das Produkt hat in dem 4001-Rührbehälter eine mittlere Verweilzeit von ca. 11 min.

Das Produkt wird kontinuierlich in einen zweiten Rührbehälter übertragen in den zusätzlich ca. 100 kg/h Füllstoffsuspension eingeleitet werden. Die mittlere Verweilzeit im zweiten Rührbehälter beträgt ca. 90 Minuten. Hierdurch wird die fest mit den Teilchen verbundene Coatingschicht zur Verringerung der Klebrigkeit aufgebracht.

Der Feststoff wird anschließend mittels einer Zentrifuge vom Serum abgetrennt und in einer Wirbelschicht auf eine Restfeuchte unter 1 % getrocknet.

Das Produkt enthält nach der Trocknung 100 phr (parts per hundred parts of rubber) Festkautschuk und 76 phr Ruß N234.

Die anwendungstechnische und schüttguttechnische Bewertung der Probe ergab im Vergleich zu den Referenzprodukten (z.B. nach DE 100 08 877.5 hergestellte Produkte) keine Unterschiede.

### Beispiel 3 (Bild 2): Herstellung von Pulverkautschuk auf Basis E-SBR 1712, Enerthene, Corax N234 (nasser Fluffy)

Unter Rühren wird eine stabile Suspension aus 98,8 kg (TS) Corax N234 (nasser Fluffy), 32,5 kg Enerthene und 15 kg 9,5%ige Aluminiumsulfatlösung in 21001 Wasser hergestellt.

Diese Suspension wird mit einer Pumpe (ca. 1570 kg/h) simultan mit der Kautschukemulsion (E-SBR 1712, 19,7 % Feststoff) dem Fällbehälter zudosiert. Der Gesamtdurchsatz beträgt 2240 kg/h. Unter heftigem Rühren wird die säurekatalytisierte Latexkoagulation unter der Zugabe von 1,1 kg Schwefelsäure (20 %) bei einem pH-Wert von 4, auf die Füllstoffteilchen durchgeführt. Das Produkt hat in dem 400 1-Rührbehälter eine mittlere Verweilzeit von ca. 11 min.

Das Produkt wird kontinuierlich in einen zweiten Rührbehälter überführt, in den zusätzlich ca. 170 kg/h Füllstoffsuspension eingeleitet werden. Die mittlere Verweilzeit im zweiten Rührbehälter beträgt ca. 90 Minuten. Hierdurch wird die fest mit den Teilchen verbundene Coatingschicht zur Verringerung der Klebrigkeit aufgebracht.

Der Feststoff wird anschließend mittels einer Zentrifuge vom Serum abgetrennt und in einer Wirbelschicht auf eine Restfeuchte unter 1 % getrocknet.

Nach der Trocknung wird dem Granulat in einem Pulvermischer 1 phr feinteiliges ZnO-Pulver beigemischt, um die schüttgutmechanischen Eigenschaften auch über längere Lagerzeiträume zu erhalten.

Das Produkt enthält nach der Trocknung 100 phr (parts per hundred parts of rubber) Festkautschuk, 25 phr Prozessöl (Enerthene 1849-1) und 76 phr Ruß N234.

Die anwendungstechnische und schüttguttechnische Bewertung der Probe ergab im Vergleich zu den Referenzprodukten (z. B. nach DE 100 08 877.5 hergestellte Produkte) keine Unterschiede.

### Beispiel 4 (Bild 2): Herstellung von Pulverkautschuk auf Basis NR-Fieldlatex, Corax N234 (nasser Fluffy)

Unter Rühren wird eine stabile Suspension aus 35,3 kg (TS) Corax N234 (nasser Fluffy) in 770 1 Wasser hergestellt.

Diese Suspension wird mit einer Pumpe (ca. 900 kg/h) simultan mit dem NR-Latex (32,7 % Feststoff) dem Fällbehälter zudosiert. Der Gesamtdurchsatz beträgt 1540 kg/h. Unter heftigem Rühren wird die säurekatalytische Latexkoagulation unter der Zugabe von 4 kg Schwefelsäure (20 %) bei einem pH-Wert von 4, auf die Füllstoffteilchen durchgeführt. Das Produkt hat in dem 600 1-Rührbehälter eine mittlere Verweilzeit von ca. 23 min.

Das Produkt wird kontinuierlich in einen zweiten Rührbehälter überführt, in den zusätzlich ca. 900 kg/h Füllstoffsuspension eingeleitet werden. Die mittlere Verweilzeit im zweiten Rührbehälter beträgt ca. 120 Minuten. Hierdurch wird die fest mit den Teilchen verbundene Coatingschicht zur Verringerung der Klebrigkeit aufgebracht.

Der Feststoff wird anschließend mittels einer Zentrifuge vom Serum abgetrennt und in einer Wirbelschicht auf eine Restfeuchte unter 1 % getrocknet.

Nach der Trocknung wird dem Granulat in einem Pulvermischer 1 phr feinteiliges ZnO-Pulver beigemischt, um die schüttgutmechanischen Eigenschaften auch über längere Lagerzeiträume zu erhalten.

Das Produkt enthält nach der Trocknung 100 phr (parts per hundred parts of rubber) Festkautschuk, 47 phr Ruß N234 und 1 phr ZnO.

Die anwendungstechnische und schüttguttechnische Bewertung der Probe ergab im Vergleich zu den Referenzprodukten (z. B. nach DE 100 08 877.5 hergestellte Produkte) keine Unterschiede.

### Literatur:

1) U. Görl, K.H. Nordsiek, Kautsch. Gummi Kunstst. **51** (1998) 200
2) U. Görl, M. Schmitt, Vortrag anläßlich des ACS-Meeting, Rubber Division Dallas, Texas, April 2000
3) U. Görl, M. Schmitt, Vortrag anlässlich des IRC-Meetings 2000, Melbourne, Australia, Nov. 2000
4) M. Schmitt, U. Görl, K-Zeitung, 08.02.2001
5) M. Schmitt, U. Görl, Vortrag anlässlich der ASSOGOMMA-Tagung, April 2001 Mailand, Italien
6) Delphi Report "Künftige Herstellverfahren in der Gummiindustrie" Rubber Journal, Vol. 154, Nr. 11, 20-34 (1942)
7) R. Uphus, O. Skibba, R.H. Schuster, U. Görl, Kautsch. Gummi Kunstst. **53** (2000) 279
8) R. Uphus, O. Skibba, R.H. Schuster, paper presented at the ACS Meeting, Rubber Division, Dallas/Texas; USA April, 2000
9) A.Amash, M.Bogun, R.H. Schuster, U. Görl, M. Schmitt, in Plastics, Rubber and Composites, **30** (2001) 401 1

## Patentansprüche

1. Verfahren zur kontinuierlichen Herstellung füllstoffhaltiger Kautschukgranulate auf Basis wässriger Kautschukemulsionen oder -Latizes **dadurch gekennzeichnet, dass**
a) Eine wässrige Füllstoffpräparation die Fällmittel enthält parallel mit einer wässrigen Kautschukemulsion oder eines Latex in einen Reaktor geleitet werden, der Kautschuk auf der Füllstoffoberfläche koaguliert und die so hergestellte Fällsuspension kontinuierlich aus dem Reaktor abgelassen wird.
b) Die Zufuhr der Edukte mittels getrennter Rohrleitungen in den Reaktor erfolgt.
c) Die Reaktion in einem kontinuierlich betriebenen Rührreaktor oder in mehreren seriell kontinuierlich betriebenen Rührreaktoren (Kaskade) erfolgt.
d) Die Latexkoagulation mittels einer Absenkung des pH-Wertes und/oder der Zugabe eines wasserlöslichen Salzes von Metallen der Gruppe IIa, IIb, IIIa oder VIII des Periodensystems der Elemente erfolgt.

2. Verfahren nach Anspruch 1,
**dadurch gekennzeichnet,**
**dass** der Produktstrom aus Füllstoffsuspension und Polymeremulsion im ersten seriellen Reaktor eine mittlere Verweilzeit von 0,1 s bis 60 min hat.

3. Verfahren nach Anspruch 1,
**dadurch gekennzeichnet,**
**dass** der Produktstrom aus Füllstoffsuspension und Polymeremulsion im zweiten und dritten seriellen Reaktor eine mittlere Verweilzeit von 0 min (kein zweiter oder dritter serieller Reaktor) bis 480 min hat.

4. Verfahren nach einem der vorhergehenden Ansprüche,
**dadurch gekennzeichnet,**
**dass** der pH-Wert im ersten Reaktor zwischen 2,5 und 7,0, in einer besonders bevorzugten Ausführung zwischen 3,0 und 5,0 liegt.

5. Verfahren nach einem der vorhergehenden Ansprüche,
**dadurch gekennzeichnet,**
**dass** der pH-Wert in den möglicherweise mehreren seriellen Reaktoren unterschiedlich eingestellt wird. In einer besonders bevorzugten Ausführung wird der pH-Wert von Reaktor zu Reaktor abgesenkt.

6. Verfahren nach einem der vorhergehenden Ansprüche,
**dadurch gekennzeichnet,**
**dass** die Herstellung der füllstoffhaltigen Kautschukpulver bei Temperaturen zwischen 10 und 90 °C, in einer besonders bevorzugten Ausführung zwischen 15 und 40 °C, durchgeführt wird.

7. Verfahren nach einem der vorhergehenden Ansprüche;
**dadurch gekennzeichnet,**
**dass** als Füllstoff die aus der Kautschukverarbeitenden Industrie bekannten Füllstoffe natürlicher oder synthetischer Art, wie Industrieruße, gefällte oder pyrogene Kieselsäuren, Clays, aber auch sonstige in der Umwelttechnik bekannte Absorbentien und Adsorbentien, wie Aktivkohle oder hochoberflächige Stoffe einzeln oder in einem Gemisch mit einem Anteil von 20 bis 99,9 % zum Einsatz kommen.

8. Verfahren nach einem der vorhergehenden Ansprüche,
**dadurch gekennzeichnet,**
**dass** als Kautschuk einzeln oder im Gemisch miteinander folgende Typen zum Einsatz kommen: Naturkautschuk, Emulsions-SBR, Butyl-Acrylnitril-Kautschuk, Butylkautschuke, Terpolymere aus Ethylen, Propylen (EPM) und nicht konjugierte Diene (EPDM), Butadienkautschuke, Lösungs-SBR und Isoprenkautschuke. Neben den genannten Kautschuken kommen folgende Elastomere, einzeln oder im Gemisch, in Frage: Carboxylkautschuke, Epoxidkautschuke, Trans-Polypentenamer, halogenierte Butylkautschuke, Kautschuke aus 2-Chlor-Butadien, Ethylen-Vinylacetat-Copolymere, Epichlorhydrine, gegebenenfalls auch chemisch modifizierter Naturkautschuk, wie z. B. epoxidierte Typen.

9. Verfahren nach einem der vorhergehenden Ansprüche,
**dadurch gekennzeichnet,**
**dass** auch die in der Polymer- und Kautschukindustrie bekannten Verarbeitungs- und Vulkanisationshilfsmittel, wie z.B. Zinkoxid, Zinkstearat, Stearinsäure, Polyalkohole, Polyamine, Weichmacher, Alterungsschutzmittel gegen Wärme, Licht, Sauerstoff und Ozon, Verstärkerharze, Flammschutzmittel, wie zum Beispiel Al(OH)₃ und Mg(OH)₂, Pigmente, ZnO, verschiedenen Vernetzungschemikalien und gegebenenfalls Schwefel in den gummitechnisch üblichen Konzentrationen enthalten sind.

10. Verfahren nach einem der vorhergehenden Ansprüche,
**dadurch gekennzeichnet,**
**dass** auch die in der Kautschukindustrie bekannten Organosiliciumverbindungen als Verstärkungsadditive enthalten sind.

11. Verfahren nach einem der vorhergehenden Ansprüche,
**dadurch gekennzeichnet,**
**dass** der nach der Herstellung sich im Wasser befindliche Feststoff mechanisch abgetrennt wird.

12. Verfahren nach einem der vorhergehenden Ansprüche,
**dadurch gekennzeichnet,**
**dass** der Feststoff nach der mechanischen Abtrennung bei Bedarf zerkleinert/granuliert wird.

13. Verfahren nach einem der vorhergehenden Ansprüche,
**dadurch gekennzeichnet,**
**dass** der Feststoff bei Bedarf anschließend thermisch auf Restfeuchten unter 3 % getrocknet wird.

14. Verfahren nach einem der vorhergehenden Ansprüche,
**dadurch gekennzeichnet,**
**dass** das fertige, getrocknete Produkt bei Bedarf zur Reduzierung der Klebrigkeit trocken gecoatet wird.

15. Verfahren nach einem der vorhergehenden Ansprüche,
**dadurch gekennzeichnet,**
**dass** das Aufbringen des Coatingmaterials in Mengen von 0,1 bis 3 phr in Pulvermischern unter Vermeidung von Scherung erfolgt.

16. Verfahren nach einem der vorhergehenden Ansprüche,
**dadurch gekennzeichnet,**
**dass** als Coatingmaterial Stearinsäure, Kieselsäure oder Zinkoxid zum Einsatz kommt.

## Claims

1. Process for the continuous preparation of filled rubber granules based on aqueous rubber emulsions or on aqueous rubber lattices, **characterized in that** comprising precipitants
a) an aqueous filler preparation is passed in parallel with an aqueous rubber emulsion or a latex into a reactor which coagulates rubber on the surface of the filler, and continuously discharging the resultant precipitation suspension from the reactor;
b) separate pipelines are used to feed the starting materials into the reactor;
c) the reaction is carried out in a continuously operated stirred reactor or in two or more stirred reactors continuously operated in series (a cascade);
d) the latex is coagulated by lowering the pH and/or adding a water-soluble salt of metals of group IIa, IIb, IIIa, or VIII of the periodic table of the elements.

2. Process according to Claim 1,
**characterized in that**
the product stream of filler suspension and polymer emulsion has an average residence time of from 0.1 s to 60 min in the first reactor in series.

3. Process according to Claim 1,
**characterized in that**
the product stream of filler suspension and polymer emulsion has an average residence time of from 0 (if no second or third reactor is present in series) to 480 min in the second and third reactor in series.

4. Process according to any of the preceding claims,
**characterized in that**
the pH in the first reactor is from 2.5 to 7.0, and in a particularly preferred embodiment from 3.0 to 5.0.

5. Process according to any of the preceding claims,
**characterized in that**
the pH is adjusted to be different in the reactors in series, of which there may be two or more, the pH falling from reactor to reactor in one particularly preferred embodiment.

6. Process according to any of the preceding claims,
**characterized in that**
the filled rubber powders are prepared at temperatures of from 10 to 90°C, or in one particularly preferred embodiment from 15 to 40°C.

7. Process according to any of the preceding claims,
**characterized in that**
the filler used comprises naturally occurring or synthetic fillers known from the rubber-processing industry, for example industrial carbon blacks, precipitated or fumed silicas, clays or else other absorbents and adsorbents known in environmental technology, e.g. activated carbon or high-surface-area substances, individually or in a mixture, in a proportion of from 20 to 99.9%.

8. Process according to any of the preceding claims,
**characterized in that**
the rubber used comprises the following types, individually or in a mixture with one another: natural rubber, emulsion SBR, butyl-acrylonitrile rubber, butyl rubbers, terpolymers of ethylene, propylene (EPM) and unconjugated dienes (EPDM), butadiene rubbers, solution SBR, and isoprene rubbers, use of the following elastomers, individually or in a mixture, being possible in addition to the rubbers mentioned: carboxy rubbers, epoxy rubbers, trans-polypenteneamers, halogenated butyl rubbers, rubbers derived from 2-chlorobutadiene, ethylene-vinyl acetate copolymers, epichlorohydrins, and also, where appropriate, chemically modified natural rubber, e.g. epoxidized grades.

9. Process according to any of the preceding claims,
**characterized in that**
the processing and vulcanization aids known in the polymer and rubber industry are also present, examples being zinc oxide, zinc stearate, stearic acid, polyalcohols, polyamines, plasticizers, stabilizers with respect to aging caused by heat, light, oxygen, or ozone, reinforcing resins, flame retardants, such as Al(OH)₃ and Mg(OH)₂, pigments, ZnO, various crosslinking chemicals, and, where appropriate, sulfur, in the concentrations usual in rubber technology.

10. Process according to any of the preceding claims,
**characterized in that**
as reinforcing additives, the organosilicon compounds known in the rubber industry are also present.

11. Process according to any of the preceding claims,
**characterized in that**
the solid in a mixture with the water after the preparation process is isolated mechanically.

12. Process according to any of the preceding claims,
**characterized in that**
after mechanical isolation, the solid is comminuted/granulated if necessary.

13. Process according to any of the preceding claims,
**characterized in that**
heat is then used to dry the solid to residual moisture levels below 3%, if required.

14. Process according to any of the preceding claims,
**characterized in that**
the finished, dried product is, if necessary, dry-coated to reduce tack.

15. Process according to any of the preceding claims,
**characterized in that**
amounts of from 0.1 to 3 phr of the coating material are applied in powder mixtures with avoidance of shear.

16. Process according to any of the preceding claims,
**characterized in that**
the coating material used comprises stearic acid, silica, or zinc oxide.

## Revendications

1. Procédé de préparation continue de granulés de caoutchouc contenant des matières de charge, à base d'émulsions aqueuses ou de latex de caoutchouc, **caractérisé en ce que**
a) on introduit dans un réacteur une préparation aqueuse de matières de charge, qui contient des précipitants, en parallèle avec une émulsion aqueuse de caoutchouc ou un latex, on provoque la coagulation du caoutchouc sur la surface de la matière de charge, et on évacue en continu du réacteur la suspension précipitée ainsi obtenue ;
b) l'introduction des matières de départ dans le réacteur est réalisée par des conduites distinctes ;
c) la réaction est mise en oeuvre dans un réacteur agitateur à exploitation continue, ou dans plusieurs réacteurs agitateurs montés en série et exploités en continu (cascade) ;
d) la coagulation du latex a lieu au moyen d'un abaissement du pH et/ou de l'addition d'un sel soluble dans l'eau de métaux du groupe IIa, IIb, IIIa ou VIII du Tableau Périodique des Eléments.

2. Procédé selon la revendication 1, **caractérisé en ce que** le courant de produit, constitué de la suspension de matière de charge et de l'émulsion de polymère, a dans le premier réacteur monté en série un temps de séjour moyen de 0,1 seconde à 60 minutes.

3. Procédé selon la revendication 1, **caractérisé en ce que** le courant de produit constitué de la suspension de matière de charge et de l'émulsion de polymère a, dans le deuxième et le troisième réacteurs montés en série, un temps de séjour moyen de 0 minute (pas de deuxième ou de troisième réacteur monté en série) à 480 minutes.

4. Procédé selon l'une des revendications précédentes, **caractérisé en ce que** le pH dans le premier réacteur est compris entre 2,5 et 7,0 et, dans une forme de réalisation particulièrement préférée, est compris entre 3,0 et 5,0.

5. Procédé selon l'une des revendications précédentes, **caractérisé en ce que** le pH est ajusté à des valeurs différentes dans les éventuellement plusieurs réacteurs montés en série. Dans une forme de réalisation particulièrement préférée, le pH diminue d'un réacteur à l'autre.

6. Procédé selon l'une des revendications précédentes, **caractérisé en ce que** la préparation de la poudre de caoutchouc contenant des matières de charge est mise en oeuvre à des températures comprises entre 10 et 90°C, et dans une forme de réalisation particulièrement préférée entre 15 et 40°C.

7. Procédé selon l'une des revendications précédentes, **caractérisé en ce qu'**on utilise en tant que matière de charge les matières de charge connues dans l'industrie de transformation du caoutchouc, de nature naturelle ou synthétique, telles que les noirs de carbone industriels, les silices précipitées ou pyrogènes, les argiles, mais aussi les absorbants et adsorbants connus dans les techniques environnementales, tels que le charbon actif, ou les substances à grande aire spécifique, à titre individuel ou en mélange selon une proportion de 20 à 99,9 %.

8. Procédé selon l'une des revendications précédentes, **caractérisé en ce qu'**on utilise en tant que caoutchouc, à titre individuel ou en mélange les uns avec les autres, les types suivants : caoutchouc naturel, SBR émulsions, caoutchouc butyle-acrylonitrile, caoutchoucs butyle, terpolymères de l'éthylène, du propylène (EPM) et de diènes non conjugués (EPDM), caoutchoucs butadiène, SBR solutions et caoutchoucs isoprène. Outre les caoutchoucs mentionnés, entrent en ligne de compte, à titre individuel ou en mélange, les élastomères suivants : caoutchoucs carboxyle, caoutchoucs époxydes, trans-polypenténamère, caoutchoucs butyle halogénés ; caoutchoucs de 2-chloro-butadiène, copolymères éthylène-acétate de vinyle, épichlorhydrines, éventuellement aussi caoutchouc naturel à modification chimique, par exemple les types époxydés.

9. Procédé selon l'une des revendications précédentes, **caractérisé par** la présence, en les concentrations usuelles dans la technique du caoutchouc, des auxiliaires de mise en oeuvre et de vulcanisation connus dans l'industrie des polymères et du caoutchouc, tels par exemple que l'oxyde de zinc, le stéarate de zinc, l'acide stéarique, les polyalcools, les polyamines; les plastifiants, les agents de protection contre le vieillissement à la chaleur, à la lumière, à l'oxygène et à l'ozone, les résines de renfort, les agents d'ignifugation tels par exemple que Al(OH)₃ et Mg(OH)₂, les pigments, ZnO, différents agents de réticulation, et éventuellement le soufre.

10. Procédé selon l'une des revendications précédentes, **caractérisé en ce que** sont aussi présents, en tant qu'additifs de renfort, les composés organiques du silicium connus dans l'industrie du caoutchouc.

11. Procédé selon l'une des revendications précédentes, **caractérisé en ce que** les matières solides se trouvant dans l'eau après la préparation sont séparées par voie mécanique.

12. Procédé selon l'une des revendications précédentes, **caractérisé en ce que** les matières solides, après la séparation mécanique, sont si nécessaire broyées/granulées.

13. Procédé selon l'une des revendications précédentes, **caractérisé en ce que**, si nécessaire, les matières solides sont ensuite séchées par voie thermique jusqu'à une humidité résiduelle inférieure à 3 %.

14. Procédé selon l'une des revendications précédentes, **caractérisé en ce que** le produit séché et fini est, si nécessaire, revêtu à sec pour réduire la pégosité.

15. Procédé selon l'une des revendications précédentes, **caractérisé en ce que** l'application du matériau de revêtement a lieu en des quantités de 0,1 à 3 phr dans des mélangeurs de poudre, tout en évitant un cisaillement.

16. Procédé selon l'une des revendications précédentes, **caractérisé en ce qu'**on utilise en tant que matériau de revêtement l'acide stéarique, la silice ou l'oxyde de zinc.
